# EUROPEAN PATENT APPLICATION

(11) **EP 3 163 883 A1**
(43) Date of publication of application: **03.05.2017**
(21) Application number: 16194800.5
(22) Date of filing: 20.10.2016
(51) Int. Cl.: H04N 21/24, G06F 11/07, G06F 11/32

(54) **CONTENT DISTRIBUTION DEVICE AND CLIENT DEVICE**

(30) Priority: 27.10.2015 JP 2015210628
(71) Applicant: Funai Electric Co., Ltd., Daito Osaka 574-0013 (JP)
(72) Inventor: MIYOSHI, Masatoshi, Daito, Osaka 574-0013 (JP)
(74) Representative: Global IP Europe Patentanwaltskanzlei

(57) **Abstract**

A content distribution device is provided that comprises a communication component, and a controller. The communication component is configured to communicate with an external device via a network. The controller is configured to send a reply with an ID in response to a distribution request for content from the external device. The ID is an ID for identifying the distribution request. The controller is configured to send a message associated with the ID to the external device in response to a communication with the ID from the external device.

## Description

This application claims priority to Japanese Patent Application No. 2015-210628 filed on October 27, 2015.

### BACKGROUND

### Field of the Invention

This invention generally relates to a content distribution device and a client device.

### Background Information

Conventionally, a system in which a content distribution device (server) and a client device are communicably connected via a network is known. In this system, the client device sends a distribution request for content to the content distribution device, and the content distribution device distributes the content to the client device according to this request. Consequently, the user of the client device can watch the content stored in the content distribution device.

In the above-mentioned system, there are times when a content distribution device that has received the distribution request cannot comply with the request for some reason. As a result, the client device fails to play the content from the content distribution device. If this happens, an HTTP (hypertext transfer protocol) status code is transmitted from the content distribution device to the client device from which the distribution request has been sent.

There is a known network system comprising a server device capable of sending content by battery drive, and a client device that receives content send from the server device. The server device comprises a memory means for storing a plurality of sets of content, and a transmission means for sending the content stored in the memory means to the client device. The client device comprises a reception means for receiving the content sent from the server device. If the battery charge drops below a certain level, then the server device uses the transmission means to send the client device information related to the remaining battery charge, including a content list that lists the sets of content stored in the memory means (see Japanese Patent No. 5,202,379 (Patent Literature 1)).

### SUMMARY

The above-mentioned status code is just numbers. Thus, even if the user of the client device receives this status code, it will be difficult for him to learn the details about why the playback of content has been failed. Also, in the above-mentioned Patent Literature 1, information related to the remaining battery charge of the server is sent to the client. However, this information is shared information for all of the clients that communicate with the server. Meanwhile, the timing at which a distribution request from a client is executed will vary from one client to the next. Also, the reason why the content distribution has been failed at the server in response to the distribution requests also varies from case to case. If the reasons why the content distribution has been failed are different, then the measures that should be taken by each client will also be different.

One object is to provide a content distribution device and a client device with which detailed information related to a distribution request will be conveyed to the user for each distribution request.
[1] In view of the state of the know technology and in accordance with a first aspect of the present invention, a content distribution device is provided that comprises a communication component, and a controller. The communication component is configured to communicate with an external device via a network. The controller is configured to send a reply with an ID in response to a distribution request for content from the external device. The ID is an ID for identifying the distribution request. The controller is configured to send a message associated with the ID to the external device in response to receiving a communication with the ID from the external device.
   With this mode, the user of the external device can obtain the above message, and learn detailed information related to the distribution request. Thus, detailed information is conveyed to the user in response to the distribution request.
[2] In accordance with a preferred embodiment according to the content distribution device mentioned above, the controller is configured to add the ID to a header portion of the reply.
   With this mode, the ID can be reliably conveyed to the external device.
[3] In accordance with a preferred embodiment according to any one of the content distribution devices mentioned above, the controller is configured to add the ID to a predetermined field or an additional field in the header portion of the reply.
[4] In accordance with a preferred embodiment according to any one of the content distribution devices mentioned above, the controller is configured to associate the ID with the message that indicates a reason why distribution cannot be performed in response to the distribution request.
   With this mode, the user can learn from the message why the content is not distributed.
[5] In accordance with a preferred embodiment according to any one of the content distribution devices mentioned above, the message includes at least one of character data and image data.
   With this mode, the user can understand the message in various forms, namely, as text, as an image, or as a mixture of text and images.
[6] In accordance with a preferred embodiment according to any one of the content distribution devices mentioned above, the message indicates processing to resolve a state in which distribution cannot be performed.
   With this mode, the user can easily resolve a situation in which the content is not distributed.
[7] In accordance with a preferred embodiment according to any one of the content distribution devices mentioned above, the controller is configured to execute an operation in response to an operation request from the external device.
[8] In accordance with a preferred embodiment according to any one of the content distribution devices mentioned above, the controller is configure to send a message to the external device without producing an ID or associating an ID with a message when distribution cannot be performed at a timing of receiving the distribution request from the external device.
[9] In accordance with a preferred embodiment according to any one of the content distribution devices mentioned above, the controller is configured to add a status code of the content distribution device to the reply in addition to the ID in response to the distribution request from the external device, and configured to send the reply with the ID and the status code to the external device.
[10] In accordance with a preferred embodiment according to any one of the content distribution devices mentioned above, the controller is configured to produce the message in association with the ID in response to determining that distribution for the content cannot be performed.
[11] In accordance with a preferred embodiment according to any one of the content distribution devices mentioned above, the controller is configured to send the produced message in response to determining that the distribution for the content cannot be performed after commencing the distribution for the content to the external device.
   The technological concept of the present invention is also realized by a mode other than the content distribution device.
[12] In view of the state of the know technology and in accordance with a second aspect of the present invention, a client device is provided that comprises a communication component, and a controller. The communication component is configured to communicate with an external device (e.g., a content distribution device) via a network. The controller is configured to send a distribution request for content to the external device. The controller is configured to receive a reply to which an ID for identifying the distribution request is added from the external device, configured to send a communication with the ID to the external device, configured to receive a message associated with the ID from the external device, and configured to display the received message on a predetermined display component.
[13] In accordance with a preferred embodiment according to the client device mentioned above, the controller is configured to send the communication with the ID in response to determining that distribution cannot be performed by the external device based on the reply with the ID.
[14] In accordance with a preferred embodiment according to any one of the client devices mentioned above, the controller is configured to send an operation request to the external device based on the received message from the external device.
[15] In accordance with a preferred embodiment according to the client device mentioned above, the controller is configured to send the operation request to make the external device execute processing indicated by the received message from the external device to resolve a state of the external device in which distribution cannot be performed.
[16] In accordance with a preferred embodiment according to any one of the content distribution devices mentioned above, the controller is configured to store the message in association with the ID in a memory.
[17] In accordance with a preferred embodiment according to any one of the content distribution devices mentioned above, in response to receiving a request with an ID, the controller is configured to retrieve a message associated with the received ID from the memory, and configured to send the retrieved message to the external device.
[18] In accordance with a preferred embodiment according to any one of the content distribution devices mentioned above, the controller is configured to delete the message stored in the memory after a predetermined amount of time has elapsed.
[19] In accordance with a preferred embodiment according to any one of the content distribution devices mentioned above, the controller is configured to send the message that has been produced and associated with the ID by a device other than the content distribution device.
[20] In accordance with a preferred embodiment according to any one of the content distribution devices mentioned above, the controller is configured to produce the message in association with the ID in response to the distribution request from the external device.

A system that includes a content distribution device and a client device will also be understood to be an invention. Furthermore, the present invention can be realized by a mode other than the content distribution device, the client device, or the system. That is, a method includes at least some of the processing executed by the content distribution device and the client device, a program for causing hardware (the content distribution device or the client device) to execute this method, and a memory medium that can be read by a computer and stores the program can also be treated as inventions.

### BRIEF DESCRIPTION OF THE DRAWINGS

Referring now to the attached drawings which form a part of this original disclosure:
FIG. 1 is a block diagram showing the simplified configuration of a system in accordance with first to third embodiments;
FIG. 2 is a flowchart of the processing of the system in accordance with the first embodiment;
FIGS. 3A and 3B are diagrams showing examples of data structure of a response header;
FIG. 4 is a table showing the correlation between status codes and reasons for distribution request refusal;
FIG. 5 is a flowchart of the processing of the system in accordance with the second embodiment;
FIG. 6 is a diagram showing an example of a message produced by a digital media server of the system in accordance with the second embodiment; and
FIG. 7 is a flowchart of the processing of the system in accordance with the third embodiment.

### DETAILED DESCRIPTION OF PREFERRED EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims.

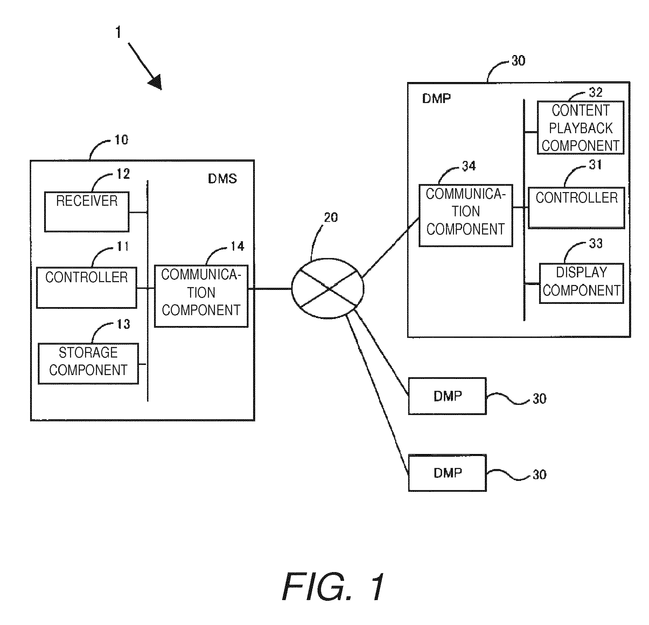

FIG. 1 is a block diagram showing the simplified configuration of a system 1 in accordance with first to third embodiments. The system 1 includes a digital media server (DMS) 10 and at least one digital media player (DMP) 30. The DMS 10 corresponds to a content distribution device or an external device of the present disclosure. The DMP 30 corresponds to a client device or an external device of the present disclosure. In the illustrated embodiments, the DMS 10 is communicably connected to a plurality of DMPs 30 via a network 20. The network 20 is, for example, a wired or wireless LAN set up in a home or office. Of course, the network 20 can be different types of network. The DMS 10 and the DMPs 30 communicate, for example, under a standard according to DLNA (Digital Living Network Alliance; DLNA is a registered trademark) guidelines.

The DMS 10 is, for example, a PC (personal computer), a home server, an HDD recorder, network attached storage, or another such product. The DMPs 30 are, for example, a digital television set, a PC, a smart phone, a tablet terminal, or another such product. The DMS 10 stores content (television programs or various other such image files and audio files, etc.). The DMS 10 sends the content via the network 20 to the DMPs 30. That is, the users of the DMPs 30 can use the DMPs 30 to view or play the content stored by the DMS 10.

The DMS 10 includes a controller 11, a receiver 12, a storage component 13 (e.g., memory), a communication component 14 (e.g., communication circuit), etc. The receiver 12 functions as a tuner, etc. The receiver 12 subjects the television broadcast signals that are received to demodulation, decoding, signal separation, and the like, and extracts video and audio signals pertaining to the television program. The storage component 13 is formed, for example, by a hard disk drive (HDD) or another such memory medium. The storage component 13 holds (stores) image files (a type of content) in a specific format corresponding to the television program, under the control of the controller 11. That is, the DMS 10 records television programs to the storage component 13. The controller 11 comprises a processor, such as a central processing unit (CPU) or the like. The controller 11 performs comprehensive control over the operation of the DMS 10. Under the controller 11, the CPU uses a random access memory (RAM) or the like as a work area to execute control programs stored in a read only memory (ROM) or the like, and to control the operation of the DMS 10.

Also, the storage component 13, for example, holds (stores) content that has been downloaded from a server on the Internet through the network 20 and the communication component 14, or content uploaded by the user himself to the DMS 10.

Communication between the DMS 10 and the DMP 30 is performed through the communication component 14 of the DMS 10, the network 20, and a communication component 34 of the DMP 30. Specifically, the communication component 14 communicates with the DMP 30 (e.g., external device) via the network 20. Also, the communication component 34 communicates with the DMS 10 (e.g., external device) via the network 20.

The DMPs 30 each include a controller 31, a content playback component 32 (e.g., player), a display component 33 (e.g., display), the communication component 34 (e.g., communication circuit), and so forth (the configuration of only one of the DMPs 30 is illustrated in FIG. 1 for the sake of brevity since the main configurations of the DMPs 30 related to the processing of the present disclosure are basically the same in the illustrated embodiment). The controller 31 comprises a processor, such as CPU, etc. The controller 31 performs comprehensive control of the operation of the DMP 30. Under the controller 31, the CPU uses a RAM or the like as a work area to execute control programs stored in a ROM or the like, and to control the operation of the DMP 30. The content playback component 32 plays the content sent from the DMS 10 to the DMP 30, for example, under a specific playback software startup environment. The display component 33 is formed by a liquid crystal display, a plasma display, an organic EL display, or the like. The display component 33 displays video or images of the content that is played. The display component 33 can also serve as an interface (touch panel) that accepts user input. It should go without saying that the DMS 10 and the DMP 30 can have any of the functions generally had by the above-mentioned specific products corresponding thereto.

### FIRST EMBODIMENT

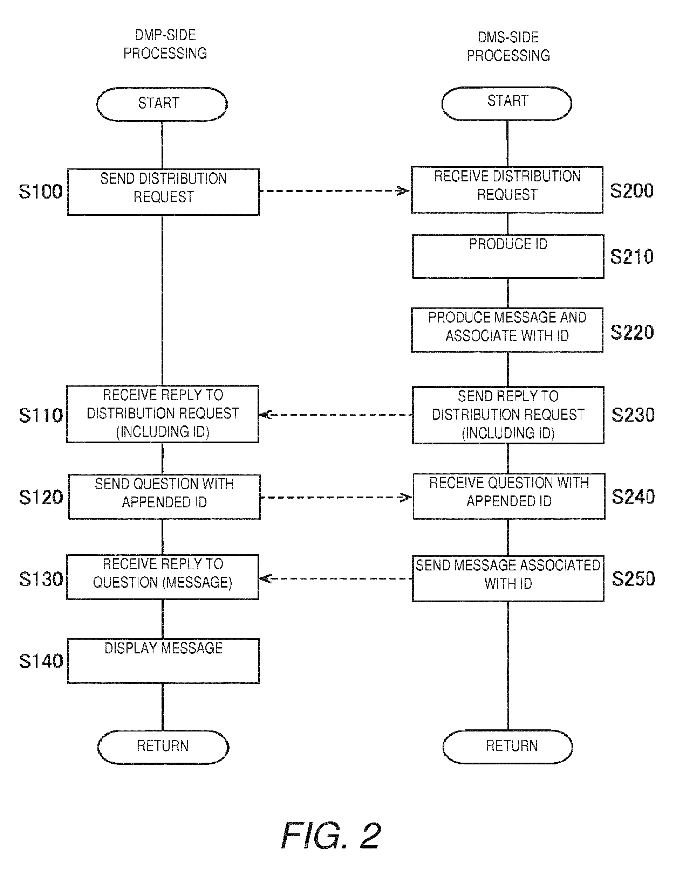

FIG. 2 is a flowchart of the processing executed by the controller 11 of the DMS 10 and the controller 31 of the DMP 30 in accordance with the first embodiment. As shown in FIG. 2, the DMP 30 is operated by a user to specify the content that is to be distributed from among all the content stored in the DMS 10. The DMP 30 also transmits a distribution request for the specified content to the DMS 10 (step S100). Thus, in the illustrated embodiment, the controller 31 of the DMP 30 sends the distribution request for content to the DMS 10 (e.g., external device)

Upon receiving the distribution request (step S200), the DMS 10 produces unique identification information (hereinafter referred to as ID) for identifying this distribution request (step S210). The ID is a random string of numbers or letters, for example. One unique ID is assigned to each distribution request from the DMPs 30.

In the first embodiment, at the point when the distribution request has been received in step S200, the controller 11 of the DMS 10 determines if the DMS 10 is able to comply with the distribution request. In the illustrated embodiment, a state of not being able to comply with the distribution request is referred to as a "special state". In particular, the controller 11 of the DMS 10 determines the operation status of the components of the DMS 10, and determines whether or not the DMS 10 is in the special state based on predetermined conditions about the operation status of the components of the DMS 10, for example. Also, at the same time, the controller 11 determines status code, such as an HTTP (hypertext transfer protocol) status code, based on the predetermined conditions. For instance, when the DMS 10 is processing network settings at the point when the distribution request is received, the DMS 10 cannot comply with the distribution request and the DMS 10 is determined to be in the special state. In this case, the controller 11 of the DMS 10 produces a message for describing the reason for this special state (a message indicating the reason why the content pertaining to the distribution request cannot be distributed). Also, the controller 11 associates this message with the ID that has been produced in step S210. Thus, in the illustrated embodiment, the controller 11 produces the message in association with the ID in response to the distribution request from the DMP 30 (e.g., external device). Also, the controller 11 stores this message with the ID in a specific memory medium (e.g., memory), such as the storage component 13 (step S220). Thus, in the illustrated embodiment, the controller 11 stores the message in association with the ID in the specific memory medium (e.g., memory).

If the DMS 10 is in the special state in which the DMS 10 cannot comply with the distribution request at the point when the distribution request is received in step S200, then the steps S210 and S220 are executed at substantially the same time. In the illustrated embodiment, the message produced in step S220 is character data (text data), such as "Network settings in progress. Content cannot be distributed.", and the like. Of course, the message is not limited to this as long as the message indicates the reason for the special state. The message can be an image data (bitmap data, vector data, and the like). Thus, in the illustrated embodiment, the message includes at least one of the character data and the image data.

The DMS 10 sends the ID produced in step S210 and the HTTP status code to the DMP 30 that is the source of the distribution request in response to the distribution request received in step S200 (step S230). In this case, the HTTP status code that is transmitted is "503," which indicates that service is unavailable. The reply from the DMS 10 to the DMP 30 basically has a data structure that includes a response header (header portion) and a body that follows the response header (such as content data).

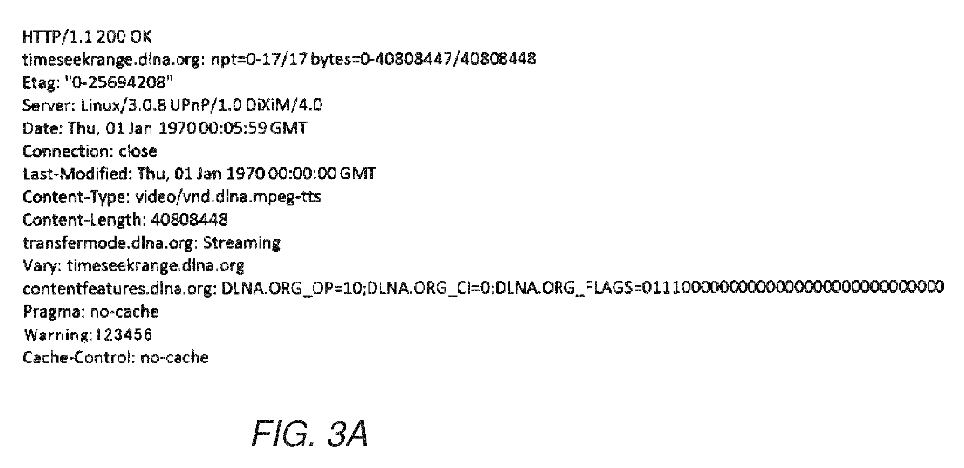

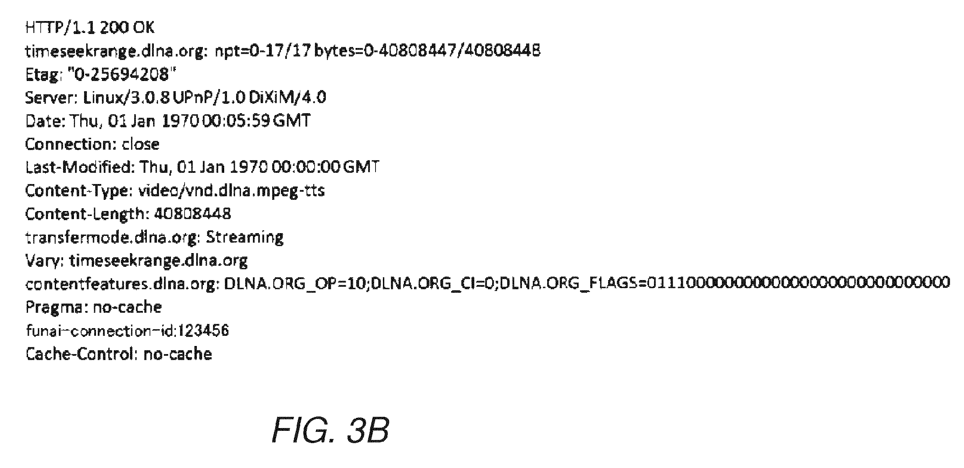

FIGS. 3A and 3B illustrate examples of the response header of the data structure. In the examples in FIGS. 3A and 3B, an HTTP status code corresponding to the situation at that point is written at the front of the response header. Also, the DMS 10 adds the ID to the response header. In FIG. 3A, an example is given in which the ID is written in the warning field of the response header (second line from the bottom). In FIG. 3B, an example is given in which the ID is written in an independent field (user defined field) defined by the manufacturer within the response header (second line from the bottom). Thus, in the illustrated embodiment, the controller 11 adds the ID to the response header (header portion) of the reply. Specifically, the controller 11 adds the ID to a predetermined field or an additional field in the response header of the reply. In the illustrated embodiment, the warning filed of the response header is an example of the predetermined field, while the independent field of the response header is an example of the additional field. Also, in the illustrated embodiment, the controller 11 adds the HTTP status code (e.g., status code) of the DMS 10 (e.g., content distribution device) to the reply in addition to the ID in response to the distribution request from the DMP 30 (e.g., external device), and sends the reply with the ID and the HTTP status code to the DMP 30.

With the DMS 10, step S230 is carried out. Thus, the controller 11 of the DMS 10 replies to the distribution request for the content from an external device (the DMP 30) by adding the ID for identifying the distribution request. Specifically, the controller 11 sends the reply with the ID in response to the distribution request for the content from the DMP 30 (external device). The ID is an ID for identifying the distribution request. Also, with the DMS 10, step S220 is carried out. Thus, the controller 11 associates the ID with the message that indicates the reason why distribution is impossible (why distribution cannot be performed) in response to the distribution request.

The controller 31 of the DMP 30 receives the response transmitted from the DMS 10 in step S230 as the reply to the distribution request sent in step S100 (step S110). This response includes the ID and the HTTP status code.

The controller 31 of the DMP 30 refers to the HTTP status code included in the response received in step S110. In the illustrated embodiment, as mentioned above, when the service is unavailable, the HTTP status code "503" is included. Then, the controller 31 recognizes that the DMS 10 is currently in the special state in which it cannot comply with the distribution request. In view of this, the controller 31 of the DMP 30 sends the DMS 10 a question (communication) about the cause of this special state, appending the ID included in the received response (step S120). In particular, the controller 31 sends the communication with the ID for obtaining the reason why distribution is impossible to the DMS 10. Thus, in the illustrated embodiment, the controller 11 of the DMS 10 sends the message associated with the ID to the DMP 30 (external device) in response to receiving the communication with the ID from the DMP 30 (external device). In the illustrated embodiment, the controller 31 can automatically send the communication with the ID to the DMS 10. For example, the controller 31 automatically sends the communication with the ID to the DMS 10 when the controller 31 determines that the HTTP status code received from the DMS 10 is a predetermined code, such as "503." Thus, in the illustrated embodiment, the controller 31 sends the communication with the ID in response to determining that the distribution cannot be performed by the DMS 10 (external device) based on the reply with the ID (based on the HTTP status code). Also, the controller can manually send the communication with the ID to the DMS 10 by the user operation inputted by the user of the DMS 10. In this case, the user can obtain the reason why the distribution is impossible only when the user wants to recognize the reason.

Upon receiving this question about the cause with the appended ID (step S240), the controller 11 of the DMS 10 retrieves from the specific memory medium (the storage component 13, for example) the message associated with the ID that matches the ID appended to this question. Then the controller 11 sends the retrieved message to the DMP 30 that sent out this question (step S250). With the DMS 10, this step S250 is carried out. Thus, the controller 11 of the DMS 10 sends the message associated with the ID to an external device (the DMP 30) in response to the communication from the external device (the DMP 30) to which the ID is added. Specifically, in response to receiving the communication with the ID, the controller 11 retrieves the message associated with the received ID from the specific memory medium (e.g., memory), and sends the retrieved message to the DMP 30 (the external device). As discussed above, if the message produced in step S220 is character data, then the DMS 10 sends this character data to the DMP 30. As to the data in the message sent in response to the question from the DMP 30, the DMS 10 can delete it after a predetermined amount of time has elapsed since transmission. Thus, in the illustrated embodiment, the controller 11 deletes the message stored in the specific memory medium (memory) after the predetermined amount of time has elapsed. This predetermined amount of time can be set as needed and/or desired. For example, this predetermined amount of time can be set to one minute, ten minutes, and the like. Also, the controller 11 of the DMS 10 can be configured such that the controller 11 deletes the message stored in the specific memory medium after a predetermined amount of time regardless of the transmission of the message (even if no question is received from the DMP 30 and the message stored in the specific memory medium is not sent).

As the reply to the question sent in step S120, the controller 31 of the DMP 30 receives the message sent from the DMS 10 in step S250 (step S130). The controller 31 of the DMP 30 displays the message received in step S130 on the display component 33 (step S140). As a result, the user looks at the display component 33 of the DMP 30 and recognizes a message such as ""Network settings in progress. Content cannot be distributed." With the DMP 30, these steps S110 to S140 are carried out. Thus, as the reply to the distribution request, the controller 31 of the DMP 30 receives a reply from the DMS 10 (external device) to which the ID for identifying the distribution request is added. The controller 31 causes the DMS 10 (a content distribution device or an external device) to execute communication to which this ID is added. Thus, the controller 31 send the communication with the ID to the DMS 10. The controller 31 receives a message associated with this ID from the DMS 10 (the content distribution device or the external device). The controller 31 displays the received message on the display component 33 (e.g. the predetermined display component).

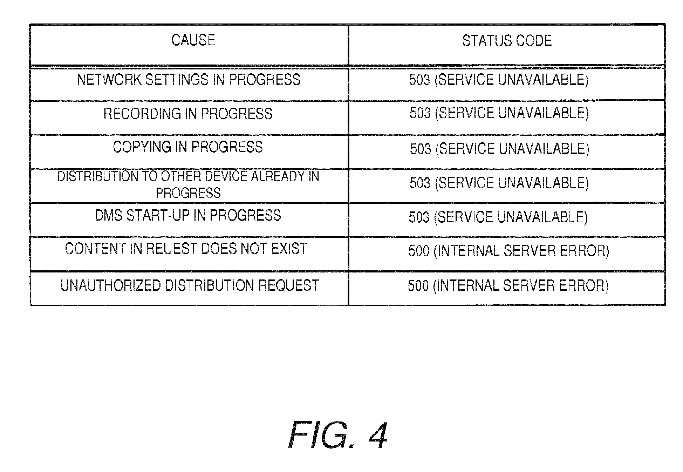

FIG. 4 shows some of the correlation between HTTP status codes and reasons why the DMS 10 refuses a distribution request (reasons for going into the special state). As can be seen from FIG. 4, the same status code (such as the above-mentioned "503") is correlated with various reasons, such as network settings in progress, copying in progress, and so on. Therefore, on the DMP 30 side, even if the HTTP status code is sent back from the DMS 10, and is referred to, it will be difficult to recognize the reason for the special state in which the DMS 10 cannot comply with the distribution request.

However, with the first embodiment discussed above, when the distribution request from the DMP 30 is refused by the DMS 10, not only is an HTTP status code sent from the DMS 10, but a message explaining the reason for the special state in which the distribution request cannot be fulfilled is sent in response to the question from the DMP 30. As a result, the user of the DMP 30 can find out exactly what the reason is.

The message produced by the DMS 10 will vary with the reason for the special state. If, for example, the reason is that a program is being recorded, then the DMS 10 produces a message that says "Program being recorded. Cannot distribute. Recording is scheduled until hh:mm (time)." Also, if the reason is that content is already being distributed to another device, for example, then a message is produced that says "Cannot distribute because content is being distributed to device name xxxx." If the reason is the desired content does not exist, then a message is produced that says "The designated program does not exist. Can have been deleted." With this configuration, there is no need to keep fixed message data to be displayed on the DMP 30 side.

In the illustrated embodiment, the DMS 10 (the content distribution device) is provided that comprises the communication component 14, and the controller 11. The communication component 14 is capable of communicating with the DMP 30 (the external device) over the network 20. The controller 11 adds the ID for identifying the distribution request for the content and replies to the distribution request from the DMP 30. The controller 11 sends the message associated with the ID to the DMP 30 in response to communication from the DMP 30 to which the ID has been added. Also, the controller 11 associates the ID with the message indicating the reason why distribution cannot be performed in response to the distribution request.

The present invention is not limited to or by the above embodiment, and can be worked in a variety of modes without departing from the gist thereof. For example, the embodiments given below can also be employed. In the following description of the embodiments, those parts that are shared with the first embodiment will be omitted as appropriate. A configuration in which a plurality of embodiments is combined as needed also falls within the scope of disclosure of the present invention.

### SECOND EMBODIMENT

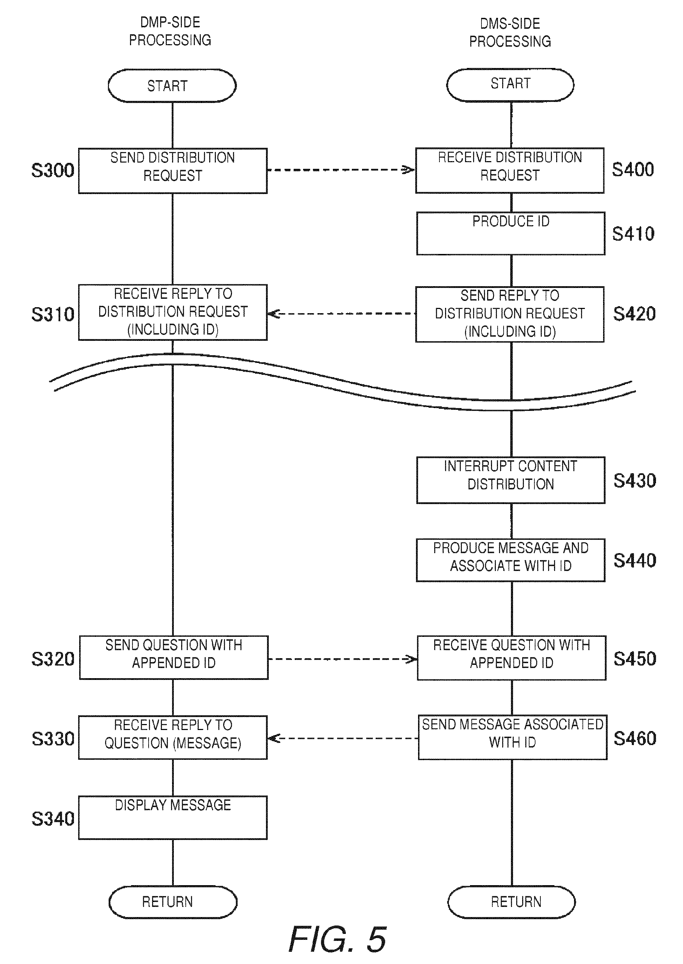

FIG. 5 is a flowchart of the processing pertaining to a second embodiment, executed by the controller 11 of the DMS 10 and the controller 31 of the DMP 30. Step S300 executed by the controller 31 of the DMP 30 is the same as step S100 in FIG. 2, and steps S400 and S410 executed by the controller 11 of the DMS 10 are the same as steps S200 and S210 in FIG. 2.

In the second embodiment, at the point when a distribution request is received in step S400, the controller 11 of the DMS 10 determines if the DMS 10 is able to comply with the distribution request. Also, the the controller 11 produces the ID for identifying the distribution request from the DMP 30 (step S410). When the controller 11 determines that the DMS 10 is in a state of being able to comply with the distribution request, then the DMS 10 sends the reply to the DMP 30. Specifically, as the reply to the distribution request received in step S400, the controller 11 of the DMS 10 sends content data requested by the distribution request and the ID produced in step S410 to the DMP 30 that sent out the distribution request (step S420). In this case, the HTTP status code that is sent is "200," which indicates a successful request (OK).

As the reply to the distribution request sent in step S300, the DMP 30 receives the response sent from the DMS 10 in step S420 (a response that includes an HTTP status code, the ID, and content data) (step S310). The DMP 30 refers to the HTTP status code (the above-mentioned "200") included in the response received in step S310, and recognizes that the DMS 10 is in a state in which it can comply with the distribution request. Thereafter, the distribution of the content in response to distribution requests is continuously executed from the DMS 10 to the DMP 30, and the content that is distributed is played and viewed on the DMP 30 side.

The distribution of the content is continuously executed from the DMS 10 to the DMP 30 until all the content is distributed unless the distribution of the content is interrupted or stopped for some reasons. For example, when the controller 11 of the DMS 10 has started a scheduled recording of a television program, the controller 11 of the DMS 10 interrupts the distribution of the content that is being executed up to that point in response to the distribution request in step S400 (step S430). Along with this interruption, the controller 11 of the DMS 10 also produces a message explaining the reason for going into the special state in which the distribution request from the DMP 30 cannot be fulfilled (step S440). This message is associated with the ID produced in step S410, and is stored in a specific memory medium, such as the storage component 13 or other external memory (step S440). The message produced in step S440 says, for example, "Program recording was started, so distribution was interrupted." Thus, in the illustrated embodiment, the controller 11 produces the message in association with the ID (step S440) in response to determining that distribution for the content cannot be performed (step S430). Also, in the illustrated embodiment, the controller 11 sends the produced message (step S460) in response to determining that the distribution for the content cannot be performed after commencing the distribution for the content to the DMP 30 (e.g., external device) (step S420).

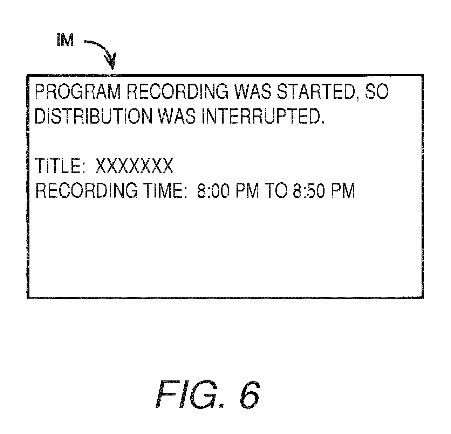

FIG. 6 shows an example of the message produced by the DMS 10. FIG. 6 shows as an example an image data IM (bitmap data, vector data, etc.) that includes the message indicative of the interruption of the distribution as discussed above. In addition to the above-mentioned message, the image data IM also gives the title of the program being recorded, and the start and end times of the recording, for example. Of course, the message is not limited to this. The message can be character data (text data).

Because the distribution of the content from the DMS 10 that has been underway is suddenly interrupted, the controller 31 of the DMP 30 recognizes that the DMS 10 is now in the special state in which it cannot comply with the distribution request. Thus, in response to determining that the distribution is interrupted or stopped, the controller 31 of the DMP 30 sends the DMS 10 a question (communication) requesting the reason for the special state, appending the ID that is included in the response received in step S310 (step S320). In particular, the controller 31 sends the communication with the ID for obtaining the reason why distribution is impossible to the DMS 10. In the illustrated embodiment, the controller 31 can automatically send the communication with the ID to the DMS 10 in response to determining that the distribution is interrupted or stopped for a predetermined amount of time, such as one minute, ten minutes, and the like. Also, the controller can manually send the communication with the ID to the DMS 10 when the distribution of the content is interrupted or stopped.

Upon receiving the question (communication) about the reason with the appended ID (step S450), the controller 11 of the DMS 10 retrieves from the specific memory medium the message associated with the ID that matches the ID appended to this question. The controller 11 also sends the retrieved message to the DMP 30 that sent out this question (step S460). The message includes at least either character data or image data. If the message is an image data IM as in the example shown in FIG. 6, the controller 11 of the DMS 10 sends this image data IM to the DMP 30.

As the reply to the question sent in step S320, the the controller 31 of the DMP 30 receives the message sent from the DMS 10 in step S460 (such as an image data IM) (step S330). The controller 31 of the DMP 30 then causes the display component 33 to display the message received in step S330 (step S340). As a result, the user looks at the display component 33 of the DMP 30 and recognizes a message such as "Program recording was started, so distribution was interrupted." With this second embodiment, when the distribution of the content that the DMS 10 was executing in response to the distribution request from the DMP 30 is interrupted, the message explaining the reason for the special state in which the distribution request cannot be fulfilled is sent in response to the question from the DMP 30. As a result, the user of the DMP 30 can find out exactly what the reason was. Also, by putting the message in the form of image data as discussed above, it is easy for more detailed information (such as the title of the program being recorded, or the start and end times of the recording) to be displayed, or for the reason to be represented as a diagram or table. This improves the visibility of the message and helps the user understand it.

### THIRD EMBODIMENT

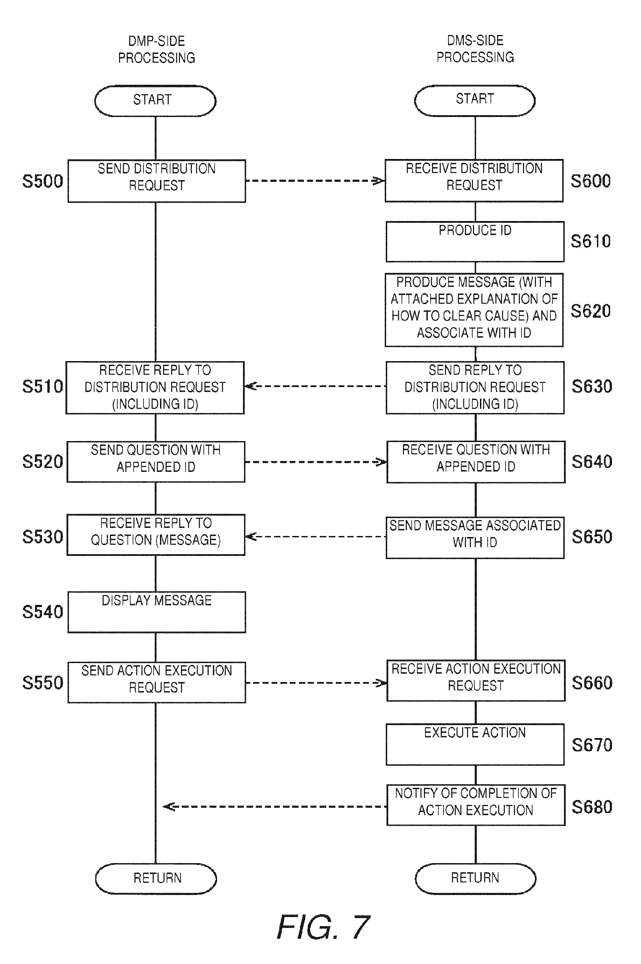

FIG. 7 is a flowchart of the processing pertaining to a third embodiment, executed by the controller 11 of the DMS 10 and the controller 31 of the DMP 30. Step S500 executed by the controller 31 of the DMP 30 is the same as step S100 in FIG. 2, and steps S600 and S610 executed by the controller 11 of the DMS 10 are the same as steps S200 and S210 in FIG. 2.

In the third embodiment, at the point when a distribution request is received in step S600, the controller 11 of the DMS 10 determines if the DMS 10 is able to comply with the distribution request. Also, the the controller 11 produces the ID for identifying the distribution request from the DMP 30 (step S610). When the controller 11 determines that the DMS 10 in the special state in which it cannot comply with this distribution request. For example, at the point when the distribution request is received, if the content in the storage component 13 is being copied to another medium (such as a DVD), then the controller 11 of the DMS 10 determines that the DMS 10 is in the special state in which it cannot comply with the distribution request. In this case, the controller 11 of the DMS 10 produces a message explaining the reason why it is in this special state, and associates this message to the ID that has been produced in step S610. The controller 11 further stores the message with the ID in a specific memory medium, such as the storage component 13 or other external memory (step S620).

In the third embodiment, the controller 11 of the DMS 10 produces a message indicating or explaining the processing for resolving the special state (or eliminating the cause), in addition to the reason for the special state (a message that indicates the processing to clear the special state in which content cannot be distributed). For instance, the controller 11 produces a message such as "Cannot distribute because copying in progress. Distribution will be possible upon making the following selection. Action: Halt copying." The produced message can be made up of character data, or can be made up of image data. Thus, in the illustrated embodiment, the message indicates the processing to resolve the specific state in which the distribution cannot be performed.

Steps S630, S640, and S650 executed by the controller 11 of the DMS 10 are the same as steps S230, S240, and S250 in FIG. 2, and steps S510, S520, S530, and S540 executed by the controller 31 of the DMP 30 are the same as steps S110, S120, S130, and S140 in FIG. 2. As a result, the user can look at the display component 33 of the DMP 30 to recognize the message such as "Cannot distribute because copying in progress. Distribution will be possible upon making the following selection. Action: Halt copying."

Having seen this message, the user can operate the DMP 30 to select whether or not to have the DMS 10 execute the action specified in the message (the processing to clear the cause of the special state). If the user operates the DMP 30 to execute this action, the controller 31 of the DMP 30 sends the DMS 10 a request to execute this action in response to the selection by the user (step S550). Thus, in the illustrated embodiment, the controller 31 sends the request (operation request) to the DMS 10 (external device) based on the received message from the DMS 10 (external device). Furthermore, in the illustrated embodiment, the controller 31 sends the request (operation request) to make the DMS 10 (external device) execute the action (processing) indicated by the received message from the DMS 10 (external device) to resolve a state of the DMS 10 (external device) in which distribution cannot be performed.

Upon receiving the request to execute the action (step S660), the controller 11 of the DMS 10 executes the action as requested (in this case, halting the copying) (step S670). Thus, in the illustrated embodiment, the controller 11 executes the action (e.g., operation) in response to the request (e.g., operation request) from the DMP 30 (e.g., external device). The controller 11 of the DMS 10 then notifies the DMP 30 that sent out the execution request that is received in step S660 that execution of this action has been completed (step S680).

With this third embodiment, when the distribution request from the DMP 30 is refused or is not complied by the DMS 10, then the controller 11 of the DMS 10 produces a message explaining the reason for the special state (in which the distribution request cannot be fulfilled) and the processing for resolving the cause of this state. Furthermore, the controller 11 of the DMS 10 sends out the message in response to the question (communication) from the DMP 30. Consequently, the user of the DMP 30 can clear this cause by operating the DMP 30. This makes the system more convenient and pleasant to use for the user.

In another modification example, if the DMS 10 is in the special state in which it cannot comply with a distribution request from a DMP 30 at the point when the distribution request is received by the DMS 10 as in the first or third embodiment, then the above-mentioned production processing of an ID and the association of the ID with a message can be omitted. In this case, the controller 11 of the DMS 10 merely sends the produced message to the DMP 30 that sent out the distribution request, as its response to the distribution request. In other words, in this case, the controller 11 of the DMS 10 merely sends the produced message to the DMP 30 in response to the distribution request without waiting for a question or communication from the DMP 30. Thus, in the illustrated embodiments, the controller 11 can send the message to the DMP 30 (e.g., external device) without producing an ID or associating an ID with the message when distribution cannot be performed at a timing of receiving the distribution request from the DMP 30 (e.g., external device). Thus, in the illustrated embodiments, the controller 11 can send the produced message prior to a communication from the DMP 30 (external device) when the distribution cannot be performed at a timing of receiving the distribution request from the DMP 30 (external device).

Also, the device that executes steps S220 (FIG. 2), S440 (FIG. 5), and S620 (FIG. 7) can be something other than the DMS 10. That is, the processing to produce a message and associate an ID with the message as discussed above can be executed by a device other than the DMS 10, such as an external device of the DMS 10. Thus, the controller 11 sends the message that has been produced and associated with the ID by a device other than the DMS 10. The DMS 10 can retrieve from the device the message that is to be sent back in response to the question or communication with the ID from the DMP 30, and send the retrieved message to the DMP 30 (steps S250 (FIG. 2), S460 (FIG. 5), and S650 (FIG. 7)).

The message that is sent by a content distribution device (the DMS 10) to a client device or an external device (the DMP 30) in the illustrated embodiments is not limited to a message explaining the reason for a special state in which a distribution request for a content cannot be fulfilled. That is, the present invention provides the concept of sending back a message that has been associated with an ID that identifies a distribution request for content in response to a question or communication to which the ID has been appended. This makes it possible for a user to be appropriately notified of various kinds of detailed information related to distribution requests.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims.

## Claims

1. A content distribution device comprising:
a communication component configured to communicate with an external device via a network; and
a controller configured to send a reply with an ID in response to a distribution request for content from the external device, with the ID identifying the distribution request, the controller being configured to send a message associated with the ID to the external device in response to receiving a communication with the ID from the external device.

2. The content distribution device according to claim 1, wherein
the controller is configured to add the ID to a header portion of the reply.

3. The content distribution device according to claim 2, wherein
the controller is configured to add the ID to a predetermined field or an additional field in the header portion of the reply.

4. The content distribution device according to any one of claims 1 to 3, wherein
the controller is configured to associate the ID with the message that indicates a reason why distribution cannot be performed in response to the distribution request.

5. The content distribution device according to any one of claims 1 to 4, wherein
the message includes at least one of character data and image data.

6. The content distribution device according to any one of claims 1 to 5, wherein
the message indicates processing to resolve a state in which distribution cannot be performed.

7. The content distribution device according to any one of claims 1 to 6, wherein
the controller is configured to execute an operation in response to an operation request from the external device.

8. The content distribution device according to any one of claims 1 to 7, wherein
the controller is configured to send a message to the external device without producing an ID or associating an ID with a message when distribution cannot be performed at a timing of receiving the distribution request from the external device.

9. The content distribution device according to any one of claims 1 to 8, wherein
the controller is configured to add a status code of the content distribution device to the reply in addition to the ID in response to the distribution request from the external device, and configured to send the reply with the ID and the status code to the external device.

10. The content distribution device according to any one of claims 1 to 9, wherein
the controller is configured to produce the message in association with the ID in response to determining that distribution for the content cannot be performed.

11. The content distribution device according to claim 10, wherein
the controller is configured to send the produced message in response to determining that the distribution for the content cannot be performed after commencing the distribution for the content to the external device.

12. A client device comprising:
a communication component configured to communicate with an external device via a network; and
a controller configured to send a distribution request for content to the external device,
the controller being configured to receive a reply to which an ID for identifying the distribution request is added from the external device, configured to send a communication with the ID to the external device, configured to receive a message associated with the ID from the external device, and configured to to display the received message on a predetermined display component.

13. The client device according to claim 12, wherein
the controller is configured to send the communication with the ID in response to determining that distribution cannot be performed by the external device based on the reply with the ID.

14. The client device according to claim 12 or 13, wherein
the controller is configured to send an operation request to the external device based on the received message from the external device.

15. The client device according to claim 14, wherein
the controller is configured to send the operation request to make the external device execute processing indicated by the received message from the external device to resolve a state of the external device in which distribution cannot be performed.
